# FASCICULE DE BREVET EUROPEEN

(11) **EP 1 767 807 B1**
(45) Date de publication et mention de la délivrance du brevet: **27.08.2008**
(21) Numéro de dépôt: 06019438.8
(22) Date de dépôt: 18.09.2006
(51) Int. Cl.: F16D 65/56

(54) **Frein de garage à tambour**
Feststellbremse einer Trommelbremse
Parking brake of a drum brake

(30) Priorité: 26.09.2005 FR 0509910
(43) Date de publication de la demande: 28.03.2007
(73) Titulaire: ROBERT BOSCH GMBH, 70442 Stuttgart (DE)
(72) Inventeur: Dupuis, Vincent, 94100 Saint Maur (FR)
(74) Mandataire: Hurwic, Aleksander Wiktor

(56) Documents cités:
- DE-A1- 10 057 323
- FR-A- 2 621 662
- US-A- 3 103 992
- US-A- 3 576 235
- US-A- 5 377 793

## Description

La présente invention concerne un frein à tambour utilisé en tant que frein de garage avec rattrapage de jeu automatique. L'invention concerne plus précisément un dispositif permettant un rattrapage de jeu automatique d'un frein de garage à tambour lors d'un freinage statique.

L'invention a pour but de permettre un rattrapage de jeu lors d'un mouvement du levier manuel de frein à main. Actuellement, deux grandes catégories de systèmes de freinages sont classiquement utilisées par l'industrie automobile. Il s'agit d'une part des systèmes munis de freins à disques, et d'autre part des systèmes munis de freins à tambours.

L'invention concerne les systèmes de freinages de véhicules automobiles munis au moins partiellement de freins à tambours pour une utilisation en tant que frein de garage.

Dans un frein à tambour, lors d'un freinage dynamique d'un véhicule en mouvement, une commande de frein actionne un cylindre de roue. Le cylindre de roue est en appui sur des extrémités respectives de deux segments. Les segments, en arc de cercle, sont disposés, sur un plateau, à l'intérieur d'un tambour de roue. Le tambour, en mouvement avec la roue, est circulaire. Les deux segments suivent le contour du tambour. Chaque segment est muni, sur une face extérieure, d'une garniture de freinage.

Une commande de frein, par exemple une pédale de frein, actionne le cylindre de roue. Le cylindre de roue repousse les segments contre une paroi interne du tambour. Les garnitures, portées respectivement par chacun des segments, se retrouvent en contact avec la paroi interne du tambour. Un frottement des garnitures contre le tambour s'oppose à la rotation du tambour. Un freinage du véhicule a alors lieu.

Le rappel des segments en position repos se fait par un ressort de rappel. Les segments s'éloignent de la paroi interne du tambour. Les garnitures ne frottent plus contre le tambour. Le freinage est terminé. Généralement on trouve deux ressorts de rappel situés de part et d'autre du plateau et reliant chacun les extrémités face à face de deux segments. Ces ressorts de rappel sont puissants et génèrent une force de rappel importante. Cette nécessité provient d'un phénomène observé d'auto-enroulement des segments contre le tambour lors du freinage et donc d'auto-serrage en sus de la force de poussée des segments sur le tambour. Cette particularité du frein à tambour implique donc une force de rappel d'autant plus grande que le phénomène s'amplifie avec la puissance exigée au freinage.

Généralement, le cylindre de roue est un dispositif hydraulique muni de deux pistons coulissant dans des directions opposées. Lors d'un freinage, une pression hydraulique repousse les deux pistons. Chacun des pistons vient respectivement en contact d'un segment. Les deux segments sont poussés contre le tambour en prenant appui et faisant pivot sur une partie fixe du plateau, tel des plots. Ce sont les extrémités de segments opposées à celles reliées par le cylindre de roue qui prennent appui sur ces points fixes du plateau.

Lorsque le freinage cesse la pression hydraulique retombe. Les pistons reviennent en position de repos, en refoulant le liquide hydraulique hors du cylindre de roue.

Dans un véhicule muni de freins à tambours, la qualité d'un freinage dépend essentiellement de l'état des garnitures. En effet, ces garnitures étant soumises aux frottements, elles subissent une usure. L'usure des garnitures entraîne une diminution de l'épaisseur de celles-ci. Or, un réglage de la pédale de frein, par exemple, est réalisé pour une épaisseur de garniture donnée. Par exemple, on règle la distance que doit parcourir la pédale de frein, pour actionner un frein tambour, pour une épaisseur de garnitures neuves. Mais cette distance augmente au cours de la vie du véhicule, c'est à dire au cours de la diminution de l'épaisseur des garnitures.

Des dispositif existent afin de rattraper un jeu qui s'installe entre le tambour et les garnitures, au fur et à mesure que les garnitures s'usent. Des freins à tambours avec rattrapage automatique de jeu ont été développés.

Les solutions connus permettent grâce à une entretoise, équipée de différents dispositifs, placée entre deux segments et située à proximité du cylindre de roue de rattraper ce jeu. C'est l'action du cylindre de roue qui écartant simultanément les deux segments vers le bord du tambour, allonge l'entretoise fixée entre chaque segment. L'entretoise équipée de dispositifs conserve, lors du rappel des segments à la fin du freinage, une partie de cette longueur acquise à la mesure du jeu d'usure de garnitures à rattraper. La conception des freins à tambour avec de tels dispositifs ne permet pas, par contre, un allongement de l'entretoise lors d'un freinage avec le levier de frein de garage. En effet le levier de frein à main possède à une extrémité, proche du cylindre de roue un axe commun avec une extrémité d'un segment et le levier prend appui, tel ce segment, contre l'entretoise. Lors d'une action de freinage le câble de traction du levier vient pousser le levier contre l'entretoise qui vient pousser le second segment contre le tambour; puis, l'action du levier se poursuivant, l'entretoise sert de pivot pour, en contre réaction et grâce à l'axe commun du premier segment, pousser ce premier segment contre le tambour. Durant toute cette action, on constate que l'entretoise est constamment en compression et non en traction ce qui empêche les dispositifs connus de rattrapage de jeu de fonctionner.

Un problème de ces dispositifs est qu'ils nécessitent, pour la plupart, plusieurs actions consécutives de la pédale de frein pour rattraper la totalité du jeu et surtout qu'ils ne fonctionnent que lors et grâce à l'action du cylindre de roue. En effet ces dispositifs actuels sont prévus pour fonctionner lors d'un freinage dynamique utilisant la pédale de frein donc le cylindre de roue.

Ainsi un véhicule, a fortiori non équipé, mais aussi équipé d'un de ces dispositifs ne peut bénéficier d'un rattrapage du jeu entre le tambour et les garnitures lors d'une action de freinage manuelle faisant intervenir le levier de frein de garage. Une action de cette nature peut s'imposer pour l'immobilisation d'un véhicule sur une place de garage mais peut aussi survenir lors d'un freinage d'urgence, en secours, dans une descente de montagne par exemple, alors que le circuit hydraulique traditionnel est déficient. Le document DE 10057323 révèle le préambule de la revendication 1.

Ainsi la solution proposée dans l'invention permet un rattrapage du jeu d'usure des garnitures de frein pour un frein à tambour utilisé simplement en tant que frein de garage.

Dans l'invention, c'est le levier de frein de garage qui va déclencher une action d'un ressort de rappel et ce ressort de rappel va provoquer l'ajustement d'une biellette muni d'un dispositif vis-écrou avec un écrou dentelé. La biellette est placée entre deux extrémités de deux segments en lieu et place des parties fixes habituelles de pivot des segments et donc, selon un axe diamétral du plateau, à l'opposé du cylindre de roue habituellement présent. Cette biellette est de plus orientée le long du ressort de rappel, situé de ce coté des segments, de sorte que le ressort passe entre deux dents de l'écrou dentelé. De plus ce même ressort de rappel possède une rampe sur laquelle prend appui le levier de frein de garage à partir d'un débattement trop important du levier, débattement dépassant le réglage d'origine prévu avec des garnitures de frein pas ou peu usées. L'action du levier de frein de garage tout en écartant les segments a pour effet de décaler l'axe longitudinal du ressort de rappel vers le bord du tambour, par conséquent, de déplacer ce même ressort sur les dents de l'écrou dentelé. Ainsi dès que le débattement maximum prévu est atteint, le levier soulève le ressort de rappel sur sa rampe, le ressort prend alors appui sur un autre motif dentelé de l'écrou et, suivant le motif de dentelure utilisé, créé un couple de rotation sur l'écrou au serrage ou au desserrage du frein. Ce couple de rotation est corrélé à la translation de l'axe du ressort d'avant en arrière vers le centre du plateau ou vers le bord du tambour. De la sorte l'écrou dentelé en rotation actionne la vis et écarte ainsi les deux parties de la douille composant la biellette. Ainsi l'écartement des segments est constamment réajusté en fonction de l'usure des garnitures de frein lors de l'utilisation du frein de garage. Ce réajustement se réalise tout en conservant une tension de rappel des deux segments sur la biellette.

L'invention selon la revendication 1 a donc pour objet un frein de garage à tambour comprenant
- un plateau,
- deux segments en arc de cercle, diamétralement opposés au bord du plateau,
- deux garnitures de friction, portées respectivement par les deux segments,
- un moyen élastique reliant entre elles deux premières extrémités des segments,
- une entretoise, située entre le moyen élastique et l'axe du plateau, en appui sur les deux segments,
- un ressort de rappel placé à l'opposé du moyen élastique selon un axe diamétral du plateau et reliant, entre elles des secondes extrémités des deux segments,
- un levier de frein de garage, monté sur une extrémité de l'entretoise, une extrémité de ce levier possède un pivot afin de permettre la rotation du levier, ce pivot permettant une rotation d'une extrémité d'un segment proche du moyen élastique, l'autre extrémité du levier est munie d'un câble et actionnée par un moyen mécanique, elle permet de repousser les deux segments contre le tambour,

- une biellette de rattrapage de jeu munie d'une douille, d'une vis et d'un écrou,
- la biellette est en appui sur les deux extrémités des segments reliées par le ressort de rappel,
caractérisé en ce que
- la longueur de la biellette varie sous l'action du ressort de rappel.

L'invention sera mieux comprise à la lecture de la description qui suit et à l'examen des figures qui l'accompagne. Celle ci ne sont présentées qu'à titre indicatif et nullement limitatif de l'invention. Les figures montrent:
- Figure 1 : une vue schématique de face d'un frein à tambour selon l'invention,
- Figure 2 : une vue en coupe et de profil de la biellette,
- Figure 3 : une vue en coupe et de profil du ressort de l'invention,
- Figure 4 : une vue de face des segments et du ressort lors d'un déplacement,
- Figures 5 et 6 : des vues de face de l'écrou dentelé avec différentes dentelures.

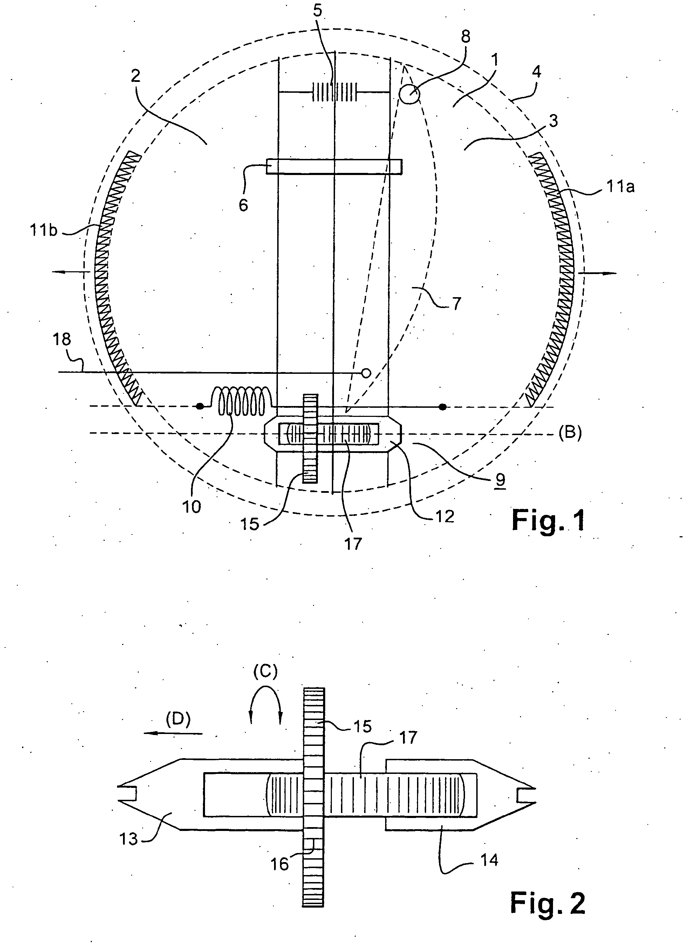

La figure 1 montre un frein de garage à tambour avec un plateau 1, sur ce plateau 1, deux segments 2 et 3 munis chacun d'une garniture de friction 11 a et 11 b. Ces deux segments 2 et 3, de formes sensiblement en demi lune sont face à face avec leur bord rond orienté du coté de la paroi du tambour 4. Les deux segments 2 et 3 sont coulissants le long du plateau 1 selon une direction sensiblement radiale. Ils sont reliés par l'une de leurs extrémités par un moyen élastique 5. Une entretoise 6 située, à partir du moyen élastique 5, au premier tiers environ de la distance entre le moyen élastique 5 et le l'axe du plateau prend appui entre le bord rectiligne de chacun des segments 2 et 3 . Un levier 7 de frein de garage en forme d'arc dont une extrémité dispose d'un axe 8 commun avec une extrémité d'un des segments, par exemple le segment 3, prend également appui sur cette entretoise 6 lorsqu'il est actionné.

A l'opposé du moyen élastique 5, selon un axe diamétral du plateau, se trouve une biellette 9. Cette biellette 9 permet aux deux autres extrémités des segments 2 et 3 d'y prendre appui. Parallèlement à l'axe (B) longitudinal de la biellette 9 se trouve un ressort 10 de rappel fixé sur chaque segment 2 et 3 et rappelant les segments 2 et 3 contre la biellette 9. Le principe du freinage par le levier 7 de frein de garage est le suivant : on actionne le levier 7 de frein de garage mécaniquement par un frein à main ou par une pédale, le levier 7 de frein de garage pivote sur son axe 8 commun à celui du segment 3 en poussant l'entretoise 6 contre le second segment 2 qui vient au contact contre le tambour 4.

Durant cette première phase, le segment 2 pivote contre la biellette 9, tout en allongeant le ressort 10 de rappel. Dans un deuxième temps, l'action du levier 7 de frein de garage se poursuit contre l'entretoise 6, en contre réaction, le second segment 3 d'axe 8 commun avec le levier 7 de frein de garage vient en poussée également contre le bord du tambour 4. Durant cette deuxième phase, le second segment 3 prend également appui sur la biellette 9 et poursuit l'allongement du ressort 10 de rappel. Les deux segments 2 et 3 sont alors en appui sur le tambour 4, avec leurs garnitures de friction 11a et 11b contre la paroi du tambour 4, le freinage est terminé. La course du levier 7 de frein, de garage correspond alors à une amplitude dite normale, correspondant à des garnitures de friction 11a et 11 b pas ou peu usées. Lors du desserrage du levier 7 de frein de garage, ce sont, d'un côté, un moyen élastique 5 et de l'autre, le ressort 10 de rappel, qui ramènent les deux segments 11 a et 11 b à leur position initiale.

Sur la figure 2, la biellette 9 comporte une douille composée de deux butées 13 et 14, butées en appui sur chaque segment 11 b et 11a. La biellette 9 comporte également un écrou 15 muni de dentelures 16 et une vis 17 en contact avec l'écrou 15, vis 17 située, en partie, à l'intérieur des deux butées 13 et 14 de la douille 12. Lorsqu'un couple de rotation est appliqué sur l'écrou 15 dentelé, l'écrou 15 vient en appui contre la butée 13 de la douille 12, et la butée 13 se déplace alors le long du pas de la vis 17 conçu pour allonger la biellette 9.

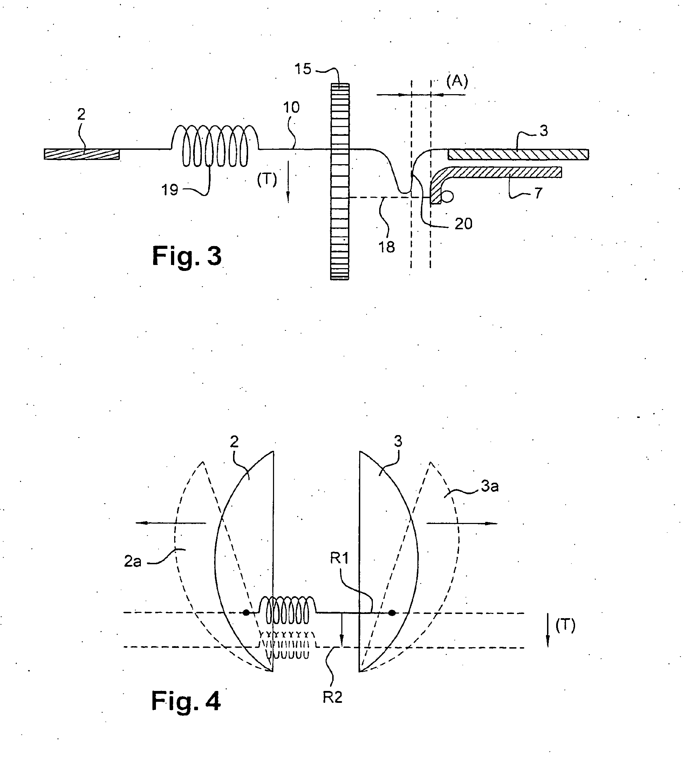

Sur la figure 3, le ressort 10 de rappel est en position dite de repos lorsque le levier 7 de frein de garage n'est pas actionné. On retrouve les deux segments 2 et 3 de part et d'autre du ressort 10 de rappel et également de profil, le levier 7 de frein de garage, ainsi que son câble 18 de traction. Le ressort 10 de rappel est en appui sur l'écrou 15 entre deux dents. Le ressort 10 de rappel comporte d'un côté de l'écrou 15 des spirales 19 nécessaires à son élasticité et de l'autre côté de l'écrou 15 une rampe 20 d'appui.

Cette rampe 20 d'appui se trouve entre le segment 3 et l'écrou 15 dentelé, du côté du levier 7 de frein à main. La course du levier 7 de freins de garage débute à partir d'une position de repos ou de dessserrage jusqu'à une position finale de serrage où les garnitures de friction 11 a et 11 b sont en contact avec les parois du tambour 4.

L'amplitude (A) moyenne de la course du levier 7 de frein de garage correspond à une position finale de fin de course du levier 7 de frein de garage faisant qu'en sorte il tangente sensiblement la rampe 20 d'appui du ressort 10 de rappel. Au delà d'une certaine usure des garnitures de friction 11a et 11b, leur épaisseur diminuant, la course des segments 2 et 3 est plus grande. Par voie de conséquence, la course du levier 7 de frein de garage nécessaire pour appliquer les segments 2 et 3 contre le tambour 4 augmente également. La course du levier 7 de frein de garage étant plus grande, ce dernier vient prendre appui contre la rampe 20 d'appui du ressort de rappel. Cette rampe 20 d'appui du ressort 10 de rappel comporte une forme, par exemple en V, de telle sorte que l'appui du levier de frein de garage sur ce V soulève le ressort 10 de rappel contre l'écrou 15 dentelé.

Sur la figure 4, une vue de face désigne les deux segments 11 a et 11 b au repos, c'est-à-dire avec un levier 7 de frein de garage desserré, puis, une position des deux segments 11 a et 11b en déplacement vers les parois du tambour 4 lors d'une action de serrage du levier 7 de frein de garage. La poussée de l'entretoise 6 sur le segment 2 se fait sur une extrémité du bord du segment 2 opposée à celle du ressort 10 de rappel, les deux segments 2 et 3 s'entrouvrent très légèrement entre eux, tout en prenant appui sur les deux extrémités de la biellette 9.

Durant cette action, l'axe (B) longitudinal du ressort 10 de rappel subit une translation d'une position initiale R1 à une position finale R2 tout en se rapprochant de la circonférence du tambour 4 avec les deux garnitures de friction 11 a et 11b au contact du tambour 4 . Cette translation du ressort 10 de rappel est corrélée à l'amplitude (A) de la course du levier 7 de frein de garage.

De plus, suivant l'état d'usure des garnitures de friction 11 a et 11 b, l'amplitude (A) de la course du levier 7 de frein de garage impose deux mouvements au ressort 10 de rappel. Dans le premier mouvement correspondant à une course d'amplitude moyenne du levier 7 de frein de garage, le ressort 10 de rappel subit une translation correspondant à un déplacement entre deux dents de l'écrou 15. Lorsque l'usure des garnitures de friction 11a et 11 b est plus importante, le levier 7 de frein de garage prend appui sur la rampe 20 du ressort 10 de rappel. Celui-ci subit alors, à la fois, une translation en direction de la circonférence du tambour 4 et une translation le soulevant au-dessus du plan moyen des deux segments 2 et 3. Cette double translation du ressort 10 de rappel en contact avec la roue 15 dentelée a pour effet d'exercer un couple de rotation (C) sur l'écrou 15 dentelé. Ce couple de rotation (C) s'applique en réaction lors du serrage du levier 7 de frein de garage, ou en contre réaction lors du desserrage de ce même levier 7. C'est la forme des motifs dentelés sur l'écrou 15 qui permet d'obtenir ce couple de rotation (C) au serrage ou au desserrage du levier 7 de frein de garage. Quelle que soit la forme de la dentelure utilisée, le pas de vis du dispositif vis/écrou permet, lors de la rotation de l'écrou 15, l'allongement de la biellette 9 en appui sur les deux segments 2 et 3.

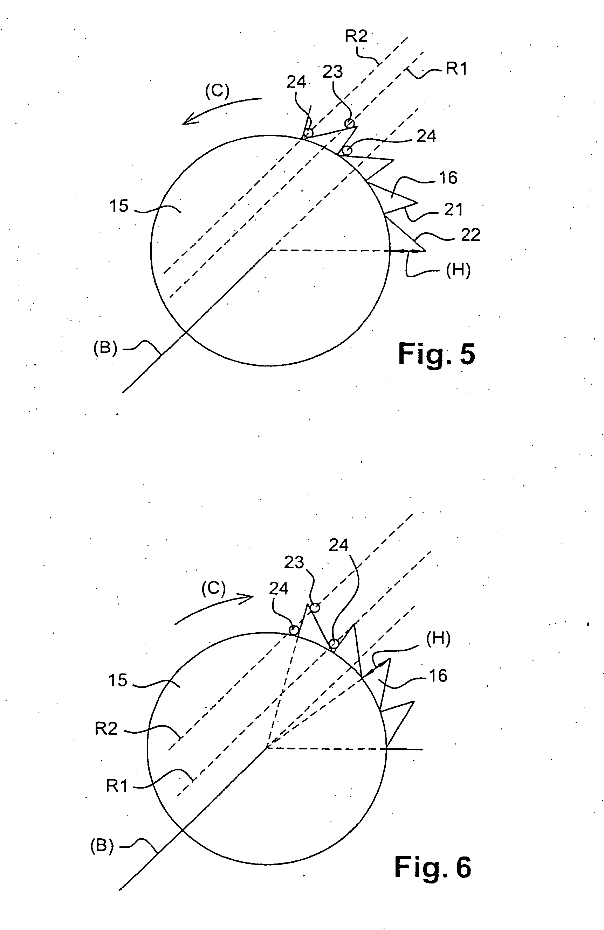

Sur la figure 5, l'écrou 15 dentelé comporte un exemple de dentelure 16 permettant, lors du serrage du levier 7 de frein de garage, d'exercer un couple de rotation (C) et d'allonger la biellette 9 afin de rattraper le jeu des garnitures de friction 11a et 11 b.

Sur l'écrou 15, les dents 16 sont formées par des sections 21 sensiblement radiales par rapport au rayon de l'écrou et par de sections obliques 22 allant du sommet d'une section 21 radiale jusqu'au contact de la circonférence de l'écrou 15. Entre une position, en haut d'une section 22 oblique de la dentelure et une position en bas de cette même section 22 oblique , le déplacement du levier 7 du ressort de rappel n'engendre pas de rotation de l'écrou 15 et d'allongement de la biellette 9.

Lorsque l'usure des garnitures de friction 11a et 11b implique un jeu trop important dans l'amplitude (A) du mouvement du levier 7 de frein de garage, le ressort 10 en position basse sur la section oblique vient buter contre le pied d'une section 21 radiale d'une dent de l'écrou 15. Alors le ressort 10 de rappel créé un couple (C) de rotation sur l'écrou 15 dentelé en passant d'une position R1 du ressort à l'équilibre à une position R2 du ressort en tension par le levier 7. La biellette 9 s'allonge afin d'écarter les deux segments 2 et 3 entre eux et de compenser le jeu supplémentaire pris par le levier 7 de frein de garage. Au desserrage du levier 7 de frein de garage, le ressort 10 de rappel en position haute sous l'action du levier 7 de frein de garage sur la rampe 20 d'appui du ressort 10 de rappel, passe la dent précédente de l'écrou 15, par rapport au sens du couple (C) de rotation, en retrouvant sa position R1 d'équilibre.

Dans une solution préférée sur la figure 6, l'écrou 15 dispose d'une dentelure permettant d'allonger la biellette au moment du desserrage du levier 7 de frein de garage. Dans le cas d'une faible usure des garnitures 11a et 11 b, le ressort 10 oscille sur une section 22 oblique du motif dentelé. Lorsque le jeu d'usure des garnitures 11a et 11b devient plus important, l'action du levier 7 sur la rampe 20 d'appui du ressort 10 de rappel a pour effet de lever le ressort 10 qui franchit le sommet d'une dent 16 pour se trouver au pied d'une section 21 perpendiculaire à la surface de l'écrou 15. Lorsque le levier 7 de frein de garage est desserré, le ressort 10 de rappel bloqué sur cette section 21 de la dentelure créé un couple (C) de rotation sur l'écrou 15. Ce couple (C) de rotation s'exerce en allongeant la biellette 9 jusqu'à ce que le ressort 10 de rappel retrouve sa position initiale R1.

Dans les deux cas d'allongement de la biellette 9 au serrage ou au desserrage du levier 7 de frein de garage, il est important de noter que la hauteur prise par le ressort 10 de rappel grâce à sa rampe 20 et à l'appui du levier 7 de garage contre cette rampe 20, devra être suffisante afin de franchir la hauteur (H) d'une dent 16 de l'écrou 15. La rampe 20 du ressort 10 de rappel est donc prévue en conséquence.

## Revendications

1. Frein de garage à tambour comprenant
- un plateau (1),
- deux segments (2,3) en arc de cercle, diamétralement opposés au bord du plateau,
- deux garnitures de friction (11a,11b), portées respectivement par les deux segments,
- un moyen élastique (5) reliant entre elles deux premières extrémités des segments,
- une entretoise (6), située entre le moyen élastique et l'axe du plateau, en appui sur les deux segments,
- un ressort de rappel (10) placé à l'opposé du moyen élastique selon un axe diamétral du plateau et reliant, entre elles des secondes extrémités des deux segments,
- un levier de frein de garage (7), monté sur une extrémité de l'entretoise, une extrémité de ce levier possède un pivot (8) afin de permettre la rotation du levier, ce pivot permettant une rotation d'une extrémité d'un segment proche du moyen élastique, l'autre extrémité du levier est munie d'un câble et actionnée par un moyen mécanique, elle permet de repousser les deux segments contre le tambour,
- une biellette de rattrapage de jeu (9) munie d'une douille (12), d'une vis (17) et d'un écrou (15),
- la biellette est en appui sur les deux extrémités des segments reliées par le ressort de rappel,
**caractérisé en ce que**
- la longueur de la biellette varie sous l'action du ressort de rappel ;
- l'écrou est dentelé et est actionné par le ressort de rappel qui comporte une rampe (20) sur laquelle prend appui le levier de frein de garage.

2. Frein de garage à tambour selon la revendication 1, **caractérisé en ce que** la longueur de la biellette de rattrapage de jeu varie sous l'action du levier de frein de garage.

3. Frein de garage à tambour selon l'une quelconque des revendications 1 à 2, **caractérisé en ce que** la douille est actionnée par l'écrou dentelé couplé à la vis.

4. Frein de garage à tambour selon l'une quelconque des revendications 1 à 3, **caractérisé en ce que** la douille comporte deux butées (13,14) en contact chacune avec une extrémité d'un segment et reliées entre elles par le dispositif vis - écrou.

5. Frein de garage à tambour selon l'une quelconque des revendications 1à 4, **caractérisé en ce que** l'écrou dentelé en rotation couplé à la vis, poussent par l'intermédiaire des butées de la douille, les segments vers le bord du plateau.

6. Frein de garage à tambour selon l'une quelconque des revendications 1 à 5, **caractérisé en ce que** l'écrou dentelé comporte une dentelure (16) pour être actionné lors d'une action de serrage du frein de garage.

7. Frein de garage à tambour selon l'une quelconque des revendications précédentes, **caractérisé en ce que** l'écrou dentelé comporte une dentelure pour être actionné lors d'une action de desserrage du frein de garage.

## Claims

1. Drum handbrake comprising
- a plate (1),
- two diametrically opposed circular arc segments (2, 3) at the edge of the plate,
- two friction facings (11a, 11b) carried by respective segments,
- spring means (5) interconnecting two first ends of the segments,
- a spacer (6) situated between the spring means and the axis of the plate and bearing on the two segments,
- a return spring (10) disposed opposite the spring means on a diametral axis of the plate and interconnecting second ends of the two segments,
- a handbrake lever (7) mounted on one end of the spacer, one end of this lever having a pivot (8) to allow rotation of the lever, this pivot allowing rotation of an end of a segment close to the spring means, the other end of the lever is provided with a cable, actuated by mechanical means, and pushes the two segments against the drum,
- a play take-up link (9) provided with a bush (12), a screw (17) and a nut (15),
- the link bears on the two ends of the segments connected by the return spring,
**characterized in that**
- the length of the link varies as a result of the action of the return spring;
- the nut is castellated and is actuated by the return spring, which includes a ramp (20) on which the handbrake lever bears.

2. Drum handbrake according to Claim 1, **characterized in that** the length of the play take-up link varies as a result of the action of the handbrake lever.

3. Drum handbrake according to either of Claims 1 and 2, **characterized in that** the bush is actuated by the castellated nut coupled to the screw.

4. Drum handbrake according to any one of Claims 1 to 3, **characterized in that** the bush includes two abutments (13, 14) each in contact with one end of a segment and interconnected by the screw-nut device.

5. Drum handbrake according to any one of Claims 1 to 4, **characterized in that** rotation of the castellated nut meshing with the screw pushes the segments toward the edge of the plate through the intermediary of the abutments of the bush.

6. Drum handbrake according to any one of Claims 1 to 5, **characterized in that** the castellated nut has teeth (16) so that it is actuated on applying the handbrake.

7. Drum handbrake according to any one of the preceding claims, **characterized in that** the castellated nut has teeth so that it is actuated on releasing the handbrake.

## Patentansprüche

1. Trommelfeststellbremse mit
- einer Platte (1),
- zwei kreisbogenförmigen Segmenten (2, 3), die am Rand der Platte diametral entgegengesetzt sind,
- zwei Reibbelägen (11a, 11b), die jeweils von den beiden Segmenten gehalten sind,
- einem elastischen Mittel (5), das zwei erste Enden der Segmente miteinander verbindet,
- einem Zwischenelement (6), das zwischen dem elastischen Mittel und der Achse der Platte angeordnet ist und an den beiden Segmenten anliegt,
- einer Rückstellfeder (10), die gemäß einer diametralen Achse der Platte entgegengesetzt zum elastischen Mittel angeordnet ist und zweite Enden der beiden Segmente miteinander verbindet,
- einem Feststellbremshebel (7), der an einem Ende des Zwischenelements angebracht ist, wobei ein Ende dieses Hebels einen Drehzapfen (8) aufweist, damit der Hebel drehen kann, wobei dieser Drehzapfen eine Drehung eines Endes eines Segments nahe dem elastischen Element ermöglicht, wobei das andere Ende des Hebels mit einem Seil versehen und durch ein mechanisches Mittel betätigt ist und es ermöglicht, die beiden Segmente gegen die Trommel zurückzudrücken,
- einer Stange (9) zur Spielbeseitigung, die mit einer Hülse (12), einer Schraube (17) und einer Mutter (15) versehen ist,
- wobei die Stange an den beiden Enden der Segmente anliegt, die durch die Rückstellfeder verbunden sind,
**dadurch gekennzeichnet, dass**
- die Länge der Stange unter der Wirkung der Rückstellfeder variiert,
- die Mutter gezahnt ist und durch die Rückstellfeder betätigt wird, die eine Rampe (20) aufweist, auf der sich der Feststellbremshebel stützt.

2. Trommelfeststellbremse nach Anspruch 1, **dadurch gekennzeichnet, dass** die Länge der Stange zur Spielbeseitigung unter der Wirkung des Feststellbremshebels variiert.

3. Trommelfeststellbremse nach einem der Ansprüche 1 bis 2, **dadurch gekennzeichnet, dass** die Hülse von der gezahnten Mutter, die an die Schraube gekoppelt ist, betätigt wird.

4. Trommelfeststellbremse nach einem der Ansprüche 1 bis 3, **dadurch gekennzeichnet, dass** die Hülse zwei Anschläge (13, 14) aufweist, die jeweils ein Ende eines Segments berühren und über die Schraube-Mutter-Vorrichtung miteinander verbunden sind.

5. Trommelfeststellbremse nach einem der Ansprüche 1 bis 4, **dadurch gekennzeichnet, dass** die sich drehende gezahnte Mutter, die an die Schraube gekoppelt ist, über die Anschläge der Hülse die Segmente zum Rand der Platte drückt.

6. Trommelfeststellbremse nach einem der Ansprüche 1 bis 5, **dadurch gekennzeichnet, dass** die gezahnte Mutter eine Zahnung (16) aufweist, damit sie betätigt wird, wenn die Feststellbremse angezogen wird.

7. Trommelfeststellbremse nach einem der vorhergehenden Ansprüche, **dadurch gekennzeichnet, dass** die gezahnte Mutter eine Zahnung aufweist, damit sie betätigt wird, wenn die Feststellbremse gelöst wird.
